# EUROPEAN PATENT APPLICATION

(11) **EP 1 781 033 A1**
(43) Date of publication of application: **02.05.2007**
(21) Application number: 05300884.3
(22) Date of filing: 31.10.2005
(51) Int. Cl.: H04N 7/173, H04N 7/58

(54) **Smart-Access Media Transmission System**

(71) Applicant: Thomson Licensing, 92100 Boulogne-Billancourt (FR)
(72) Inventor: Chen, Zhi Bo, Road, Hai Dian District 100085, Beijing (CN); Wang, Charles, 8 Xue Qing Road, Hai Dian District 100085 Beijing (CN)
(74) Representative: Rossmanith, Manfred

(57) **Abstract**

A smart-access media transmission system (SAMTS) includes a server, a network for connecting the server and clients, and a broadcasting channel for transmitting media data to all the clients. When a new client joins the broadcasting channel, a feedback channel and an append channel are temporarily created between the new client and the server. An acknowledgement information s sent from the new client to the server, which includes IP address and joined time of the new client. Then a media abstract is sent from the server to the new client. The feedback channel and the append channel will be cancelled after the short media abstract is transmitted. Therefore, the SAMTS gives a better trade-off between burden (server and network) and functionality (more initiative client) based on the techniques of video abstraction.

## Description

### FIELD OF THE INVENTION

The present invention relates to a video transmission system, and more particularly to a Smart-Access Media Transmission System (SAMTS) which provides a new type of sub-VOD functionality through broadcasting system.

### BACKGROUND OF THE INVENTION

Broadcasting System and Video-On-Demand (VOD) System are two different types of application system and provide different services to client.

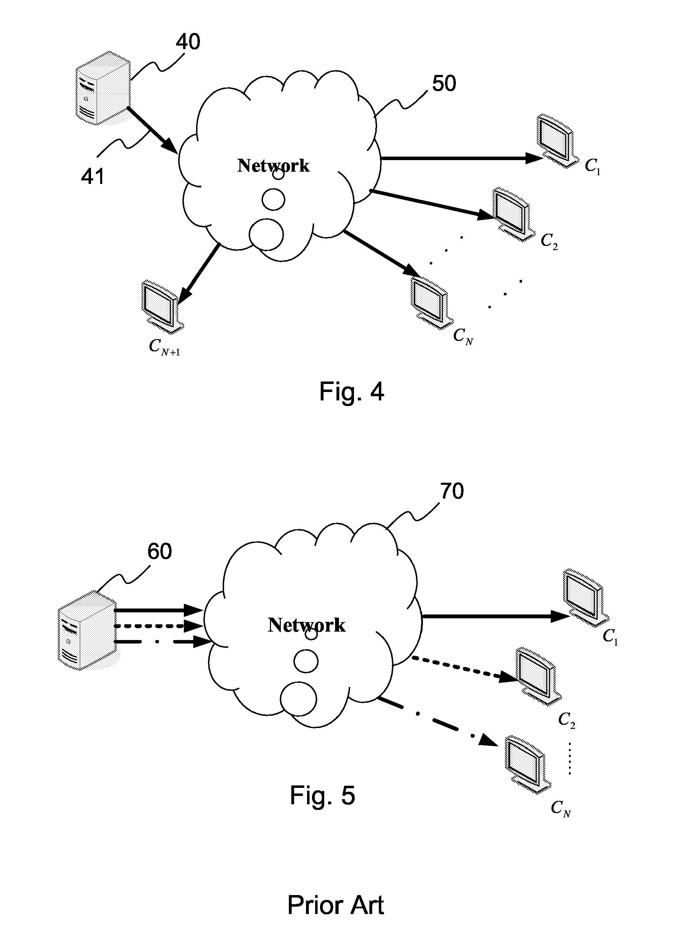

As illustrated in Fig. 4, in broadcasting system, clients C₁, C₂, ..... Cₙ are connected to a broadcasting server 40 through a network 50. The broadcasting server 40 transmits the media data to all of the clients with the same broadcasting channel 41, each client can receive different content from the different broadcasting media data passively. Although, the broadcasting system utilizes the network bandwidth efficiently, the client can only be a passive receiver and has a limited choice with regard to choosing the program he/she wants and the time he/she wants to watch.

Namely, when the broadcasting server 40 is broadcasting a program (movie, teleplay, live sports, etc.) started from time t₁, and t₁, t₂, ..., tₙ are the time of each client joined the broadcasting channel 41. When a new client Cₙ₊₁ joins the broadcasting channel 41 from tₙ₊₁, it will receive the media stream from tₙ₊₁, and only get the program content started from tₙ₊₁ without the content from t₁ to tₙ₊₁. Therefore, it is impossible for the client Cₙ₊₁ to capture some past important scenario or highlights and really difficult to follow the scenario in some cases (movie, teleplay, etc.)

On the contrary, as illustrated in Fig. 5, a VOD (Video On Demand) system can provide more flexibility for clients to choose a program they like. The VOD system includes a VOD server 60 and clients C₁, C₂, ...... Cₙ connected to the VOD server 60 through a network 70. The VOD server 60 will set up a connection to each client and transmit media data separately to each client. The client can choose the program he/she wants to watch including possible modes of operation fast-forward, back-forward, etc. For setting up the connection to each client, the VOD system should use a large bandwidth containing as many channels as possible. Thus, it brings on significant costs for the server and for the network.

Since both broadcasting system and VOD system have specific limitations, the present invention proposes a novel transmission system with a sub-VOD functionality through broadcasting system.

### SUMMARY OF THE INVENTION

The present invention is aiming to provide a smart-access media transmission system (SAMTS) which provides a type of sub-VOD functionality through a broadcasting system with more promising service for clients within current broadcasting structure by increasing a few burden on server and network.

For achieving the objective mentioned above, the present invention provides a smart-access media transmission system (SAMTS) comprising a server, a network for connecting the server and clients, and a broadcasting channel for transmitting media data to all the clients, characterized in that when a new client joins the broadcasting channel, an append channel is temporarily created between the new client and the server for transmitting a media abstract to the new client.

Advantageously, the smart-access media transmission system gives a new function for a client to selectively playback a media abstract which has been transmitted before the client joins the broadcasting system, therefore a better trade-off is provided between creating big burden of the server and the network and functionality for more initiative client based on the techniques of video abstraction.

According to an aspect of the invention, a feedback channel is temporarily created between the new client and the server for sending an acknowledgement information from the new client to the server before the append channel is created. The feedback channel and the append channel will be cancelled after the media abstract is transmitted. Advantageously, the cost for an additive bandwidth for creating the append channel and feedback channel over the broadcasting channel is limited and time variant.

According to another aspect of the invention, the media abstract is a video summary. The video summary can be a collection of still images constructed by way of sampling-based, shot-based, or segment-based work. The short media abstract is a video skimming. The video skimming is a summary sequence or a highlight. Advantageously, the media abstract can be streamed from the server to the new client through the append channel without causing a big burden for the transmitting channel and the network while provide a new function facilitating the client.

### BRIEF DESCRIPTION OF DRAWINGS

Fig. 1 is a schematic view of a smart-access media transmission system in accordance with the present invention;
Fig. 2 is a diagram of a structure of video;
Fig. 3 is a schematic view of categories of Video Abstraction techniques;
Fig. 4 is a schematic view of a broadcasting system; and
Fig. 5 is a schematic view of a VOD system.

### DETAIL DESCRIPTION OF PREFERRED EMBODIMENTS

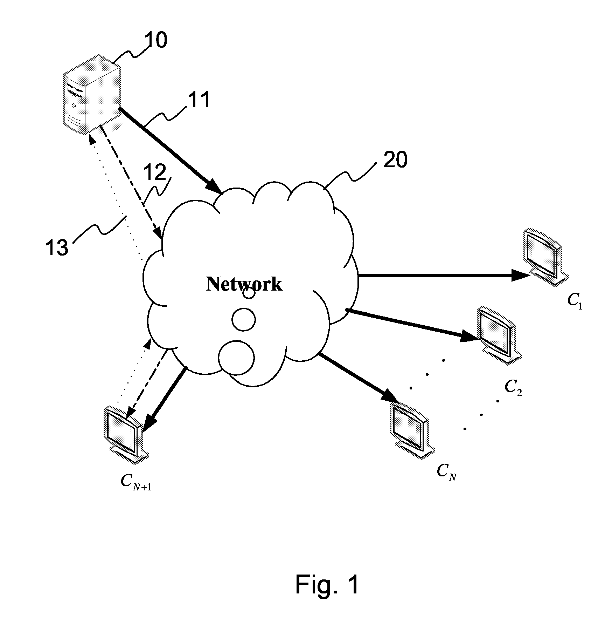

As illustrated in Fig. 1, a smart-access media transmission system (SAMTS) in accordance with the present invention comprises a server 10 with a broadcasting channel 11 connecting with a network 20, and a plurality of clients C₁, C₂, ..., Cₙ, which are respectively connected to the server 10 through the network 20.

The server 10 uses a broadcasting channel 11 for broadcasting a program (movie, teleplay, live sports, etc.) start from time t₁. Time t₁, t₂, ..., tₙ are the time of each client joining the broadcasting channel 11.

When a new client Cₙ₊₁ joins the broadcasting channel 11 at time tₙ₊₁, an append channel 12 and a feedback channel 13 are temporarily created between the server 10 and the client Cₙ₊₁. The new client Cₙ₊₁ will send an acknowledgement information (including IP address and joined time tₙ₊₁) to the server 10 via the feedback channel 13, and then the server 10 will transmit a short media abstract (video or audio or both) via the append channel 12, which includes a short summary or highlights of content from t₁ to tₙ₊₁. Then it's much easier for client Cₙ₊₁ to catch the semantic important scenario and follow the development of a movie or teleplay. The append channel 12 and feedback channel 13 will be cancelled after the short media abstract is transmitted. Therefore, the cost for an additive bandwidth for creating the append channel and feedback channel over the broadcasting channel is limited and time variant.

The media abstraction can be derived by offline program production (e.g. movie or teleplay processing) or online program production (e.g. live sports broadcasting).

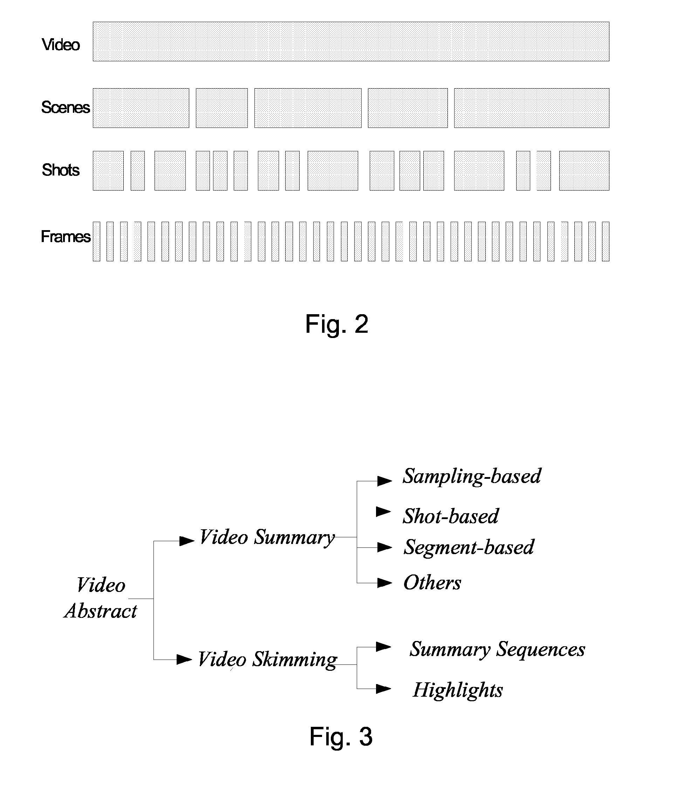

As illustrated in Fig. 2, video consists of a collection of video frames and the segmentation results can be frame, shot, scene, and video with granularity from small to large. The shot is a sequence of frames recorded in a single-camera operation, and scene is a collection of consecutive shots that have semantic similarity in object, person, space, and time. Video abstraction methods will use these notions of video structure.

Video abstraction is a short summary of the content of a long video document. Specifically, a video abstract is a sequence of still or moving images representing the content of a video in such a way that as target party is rapidly provided with concise information about the content while the essential message of the original is well preserved.

There are two fundamentally different kinds of abstracts: still-image abstract and moving-image abstract. The still-image abstract, also known as a static storyboard, is a small collection of salient images extracted or generated from the underlying video source, which can also be called as video summary. The moving-image abstract, also known as moving storyboard, or multimedia summary, consists of a collection of image sequences, as well as the corresponding audio abstract extracted from the original sequence and is thus itself a video clip but of considerably shorter length, which can also be called as video skimming.

With reference to Fig. 3, video summary is basically a collection of still images that best represent the underlying content, the extraction or generation of these stills (usually called as keyframes) becomes the main focus of all summary work. Based on the way the key-frames are constructed, all related work can be briefly categorized into 4 classes: sampling-based, shot-based, segment-based, and others.

There are basically two types of video skimming: summary sequence and highlights. A summary sequence is used to provide users an impression about the entire video content, while a highlight only contains the most interesting parts of the original video, like a movie trailer.

As a result, it can be seen that results from video skimming can be better used inside the proposed SAMTS, e.g. use summary sequence to provide the media abstract of a movie or teleplay and use highlight as a media abstract for a live sports game, etc. As an alternative choice, results from video summary can also be used inside SAMTS providing media abstract.

It can be understood through the above detailed description, the inventive smart-access media transmission system (SAMTS) provides a new function for client to selectively playback a short media abstract which has been transmitted before the client joins the broadcasting system, therefore, a better tradeoff between burden (server and network) and functionality (more initiative client) based on the techniques of video abstraction is accomplished.

Even though numerous characteristics and advantages of the present invention have been set forth in the foregoing description, together with details of the structure and function of the invention, the disclosure is illustrative only. Changes may be made in detail, especially in matters of shape, size, and arrangement of parts within the principles of the invention to the full extent indicated by the broad general meaning of the terms in which the appended claims are expressed.

## Claims

1. A smart-access media transmission system (SAMTS) comprising a server (10), a network (20) for connecting the server (10) and clients (C₁, C₂, ...... Cₙ), and a broadcasting channel (11) for transmitting media data to all the clients (C₁, C₂, ...... Cₙ), **characterized in that** when a new client (Cₙ₊₁) joins the broadcasting channel, an append channel (12) is temporarily created between the new client (Cₙ₊₁) and the server (10) for transmitting a media abstract to the new client (Cₙ₊₁).

2. The smart-access media transmission system as claimed in claim 1, **characterized in that** a feedback channel (13) is temporarily created between the new client (Cₙ₊₁) and the server (10) for sending an acknowledgement information from the new client (Cₙ₊₁) to the server (10) before the append channel (12) is created.

3. The smart-access media transmission system as claimed in claim 2, **characterized in that** the acknowledgment information being sent by the new client (Cₙ₊₁) to the server (10) includes IP address and joined time of the new client (Cₙ₊₁).

4. The smart-access media transmission system as claimed in claim 3, **characterized in that** the feedback channel (13) and the append channel (12) will be cancelled after the media abstract is transmitted.

5. The smart-access media transmission system as claimed in any one of preceding claims, **characterized in that** the media abstract is a video summary.

6. The smart-access media transmission system as claimed in claim 5, **characterized in that** the video summary is a collection of still images constructed by way of sampling-based work.

7. The smart-access media transmission system as claimed in claim 5, **characterized in that** the video summary is a collection of still images constructed by way of shot-based work.

8. The smart-access media transmission system as claimed in claim 5, **characterized in that** the video summary is a collection of still images constructed by way of segment-based work.

9. The smart-access media transmission system as claimed in any one of claims 1 to 4, **characterized in that** the media abstract is a video skimming.

10. The smart-access media transmission system as claimed in claim 9, **characterized in that** the video skimming is a summary sequence.

11. The smart-access media transmission system as claimed in claim 9, **characterized in that** the video skimming is a highlight.
